Europäisches Patentamt

European Patent Office

Office européen des brevets

(11) Veröffentlichungsnummer : **0 393 134 B1**

(12) **EUROPÄISCHE PATENTSCHRIFT**

(45) Veröffentlichungstag der Patentschrift :
09.09.92 Patentblatt 92/37

(21) Anmeldenummer : 89901113.4

(22) Anmeldetag : 16.12.88

(86) Internationale Anmeldenummer :
PCT/EP88/01169

(87) Internationale Veröffentlichungsnummer :
WO 89/05708 29.06.89 Gazette 89/14

(51) Int. Cl.⁵ : **B23Q 13/00, B25H 3/00**

(54) **SCHUTZHAUBE FÜR WERKZEUG-AUFNAHME.**

(30) Priorität : 18.12.87 DE 8716734 U

(43) Veröffentlichungstag der Anmeldung :
24.10.90 Patentblatt 90/43

(45) Bekanntmachung des Hinweises auf die
Patenterteilung :
09.09.92 Patentblatt 92/37

(84) Benannte Vertragsstaaten :
AT BE CH DE FR GB IT LI LU NL SE

(56) Entgegenhaltungen :
GB-B- 1 574 157
US-A- 3 715 801
US-A- 4 182 021
US-A- 4 196 506
US-A- 4 196 506
US-A- 4 312 111
US-A- 4 509 649

(73) Patentinhaber : **KLARER, Christoph
Bergstrasse 4a
W-8028 Taufkirchen (DE)**

(72) Erfinder : **KLARER, Christoph
Bergstrasse 4a
W-8028 Taufkirchen (DE)**

(74) Vertreter : **Bardehle, Heinz, Dipl.-Ing. et al
Patent- und Rechtsanwälte
Bardehle-Pagenberg-Dost-Altenburg-
Frohwitter- Geissler & Partner Postfach 86 06
20
W-8000 München 86 (DE)**

## Beschreibung

Die Erfindung betrifft eine Werkzeugaufnahme mit Schutzhaube mit einem Konusteil und einem damit verbundenen Anzugsteil, wobei die Schutzhaube einen Abdeckteil, der an den Konusteil angepaßt ist und diesen verschmutzungssicher umschließt, und eine federnde Klemmeinrichtung aufweist, die den Anzugsteil lösbar einrastet, wobei der Anzugsteil einen Einschnitt aufweist, und die federnde Klemmeinrichtung eine Rastzunge aufweist, die mittels eines am federnden Ende gebildeten Vorsprungs in den Einschnitt eingreift, wie beispielsweise aus US-A- 4 196 506 bekannt.

Solche Werkzeugaufnahmen dienen als Spannfutter für verschiedene Bearbeitungswerkzeuge, z.B. Bohrer, Fräser, Schleifeinsätze, etc. Die Werkzeugaufnahme selbst wird in einer Werkzeugmaschine eingespannt und von dieser angetrieben. Eine solche Werkzeugaufnahme weist im allgemeinen einen Konusteil auf, der von einer entsprechenden konusförmigen Paßform der Werkzeugmaschine aufgenommen wird. Zum Einspannen in die Werkzeugmaschine ist die Werkzeugaufnahme mit einem Einschnitt im unteren Teil und einem oberhalb der Konusspitze befestigten Anzugszapfen versehen, welcher ebenfalls einen Einschnitt aufweist.

Die Handhabung der Werkzeugaufnahme erfordert einen sorgfältigen Umgang mit der empfindlichen Konusfläche. Wenn diese beispielsweise durch das Kühlmittel des Bearbeitungswerkzeuges oder durch bei der Bearbeitung entstehende feine Metallspäne verunreinigt ist und die Werkzeugaufnahme in diesem Zustand in die Werkzeugmaschine eingesetzt wird, bilden sich entlang der Konusflächen von Werkzeugaufnahme und Werkzeugmaschine Ablagerungen und Vertiefungen. Durch Eindringen von Kühlmittel kann es zu Korrosion kommen.

Dies hat zur Folge, daß der Sitz der Werkzeugaufnahme nicht mehr genau definiert ist, sondern ein leichtes Spiel erhält, so daß eine präzise Führung der Bearbeitungswerkzeuge nicht mehr möglich ist.

Es ist bekannt, die Werkzeugaufnahme beim Auswechseln um 180° gedreht in einen Aufnahmekasten einzusetzen. Eine solche Lagerung bringt es mit sich, daß das am Werkzeug befindliche Kühlmittel abwärts auf die Konusfläche läuft und diese verschmutzt. Andererseits ist die manuelle Handhabung der Werkzeugaufnahme in umgekehrter Stellung gefährlich, weil ein Benutzer leicht beim Ergreifen der Aufnahme abrutschen kann und sich an einem scharfen Bearbeitungswerkzeug verletzt.

In der US-A-4 196 506 ist ein automatischer Werkzeugwechsler beschrieben, bei welchem die einen Konusteil und einen Anzugsteil aufweisende Werkzeugaufnahme während ihrer Lagerung und ihres Trnaportes in Schutzhauben aufgenommen sind. Dabei ist am oberen Teil der Schutzhaube eine horizontal schwenkbare Sperrklinke mit einem Anschlag vorgesehen, dessen Schulter mit einem Flansch der Werkzeugaufnahme in Eingriff bringbar ist, wobei die Sperrklinke unter Federvorspannung steht.

Bei dem Werkzeugmagazin nach der US-A-4 182 021 ist eine Werkzeugaufnahme lösbar in einer Schutzhaube gehalten; zu diesem Zweck ergreifen zwei an der Schutzhaube vorgesehene unter Federdruck stehende Klemmen einen verjüngten Schaftabschnitt der Werkzeugaufnahme.

Es ist daher Aufgabe der Erfindung, eine Vorrichtung zu schaffen, die eine einfache und sichere Handhabung der Werkzeugaufnahme erlaubt, wobei die Konusfläche während der Handhabung geschützt ist.

Diese Aufgabe wird erfindungsgemäß durch eine Werkzeugaufnahme mit Schutzhaube nach Anspruch 1 gelöst.

Der Einschnitt des Anzugsteils bildet im Eingriff mit dem Vorsprung der Rastzunge einen Drehpunkt, um den die Werkzeugaufnahme geschwenkt werden kann. Bei dieser Schwenkbewegung drückt der Konusteil über den Druckbereich die Rastzunge nach außen, so daß der Einschnitt des Anzugsteils freigegeben wird. Beim Einführen der Werkzeug-Aufnahme dient eine Abschrägung an der Unterseite des Vorsprungs dazu, die Rastzunge zu betätigen, so daß sie ohne Schwierigkeit über das Anzugsteil in den Einschnitt gleitet. Die Schwenkbewegung findet vorzugsweise in Richtung der Rastzunge statt.

Vorzugsweise ist im oberen Bereich des Abdeckteils der Schutzhaube ein Befestigungsschlitz vorgesehen, mittels dessen die Schutzhaube an einer beliebigen Platte befestigt werden kann. Auf diese Weise kann die Schutzhaube an Halteplatten befestigt werden, insbesondere an einem Drehteller. Die Schutzhaube kann aus Thermoplast bestehen, wobei im Bereich des Befestigungsschlitzes ein eingespritztes Aluminiumteil zur Verstärkung vorgesehen ist, damit dort die Schutzhaube nicht nachgeben kann. Sie kann aber auch aus Duroplast bestehen, wobei die nachgiebige Rastzunge aus Thermoplast gebildet ist.

Es ist bevorzugt, das Abdeckteil mit längs verlaufenden Stegen zu versehen, welche den Konusteil der Werkzeug-Aufnahme führen.

Weitere Vorteile, Merkmale und Anwendungsmöglichkeiten der vorliegenden Erfindung ergeben sich aus der nachfolgenden Beschreibung von drei Ausführungsformen in Verbindung mit der Zeichnung.

Fig. 1 zeigt eine Ausführungsform der erfindungsgemäßen Schutzhaube im Querschnitt von der Seite.

Fig. 2 zeigt eine Untersicht einer zweiten Ausführungsform im Querschnitt.

Fig. 3. zeigt eine Seitenansicht einer dritten Ausführungsform im Querschnitt

In den Figuren ist eine Werkzeug-Aufnahme 1 gezeigt, die einen Konusteil 2 und einen am zulaufenden Ende befestigten Anzugszapfen 3 aufweist, welcher als Anzugsteil dient. Der Anzugszapfen 3 weist einen Einschnitt oder eine Ringnut 4 auf. Es sind verschiedene Anzugszapfen im Konusteil befestigbar.

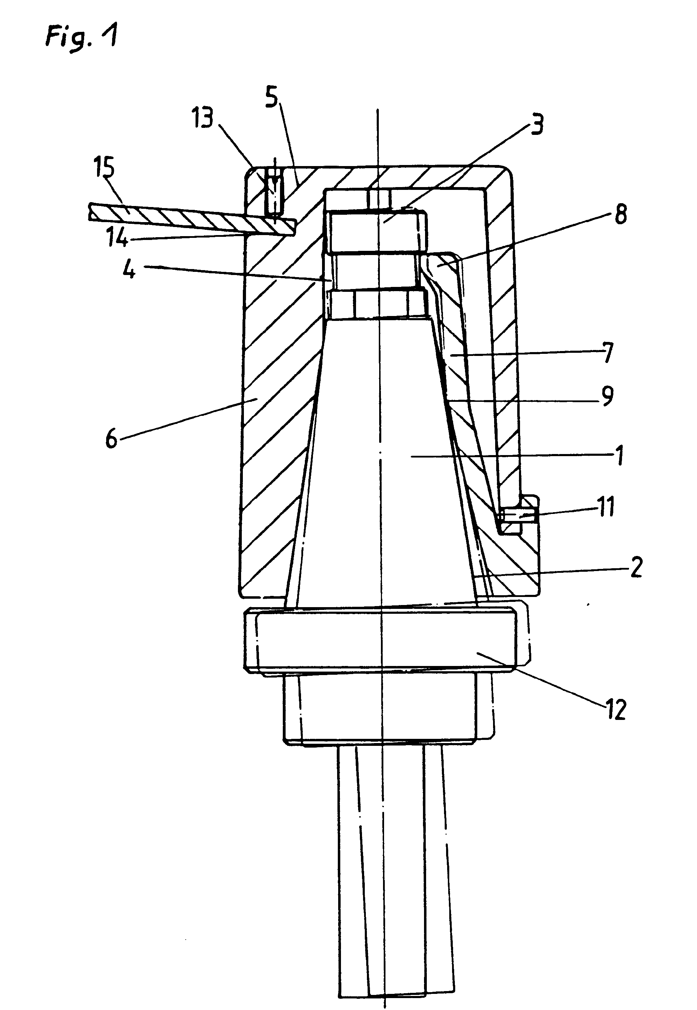

In der Fig. 1 ist eine erste Ausführungsform gezeigt. Die Schutzhaube 5 hat einen Abdeckteil 6 für den zu schützenden Konusteil 2. Der Abdeckteil 6 ist im wesentlichen hohlkegelförmig, wobei die Abdeckfläche den Konusteil im Querschnitt halbkreisförmig umschließt. An der offenen Seite ist die Rastzunge 7 gebildet, die lediglich mit einem Druckbereich 9 die Konusfläche 2 berührt. Dadurch ergibt sich eine Bewegungsfreiheit an dieser Seite, die zum Entriegeln der Werkzeug-Aufnahme ausgenützt wird. Die Rastzunge 7 ist lösbar mittels eines Steckverschlußes 11 in die Schutzhaube 5 eingesetzt. Die Rastzunge kann aber auch einstücig in dem Abdeckteil 6 ausgebildet werden. Eine lösbare Verbindung ermöglicht es, verschiedene Rastzungen für die verschiedenen Anzugszapfen 3 einzusetzen. Die Rastzunge 7 weist einen geeigneten Vorsprung 8 auf, der in den Einschnitt dergestalt eingreift, daß die Werkzeug-Aufnahme sich nicht abwärts bewegen kann. Der Vorsprung ist an seinem Unterteil angeschrägt.

Am oberen Ende der Schutzhaube ist ein Befestigungsschlitz 14 gebildet, in den eine Halteplatte 15 beweglich eingeführt werden kann. Zur Befestigung dient ein Stift 13, der durch eine entsprechend gebildete Ausnehmung die Halteplatte 15 an der Schutzhaube 5 befestigt. Anstelle des Stiftes 13 kann aber auch eine Spannschraube verwendet werden. Die Befestigung kann auch in einer U-förmigen Anformung bestehen, in welche eine Halteplatte eingreift.

Eine Werkzeug-Aufnahme 1 wird von unten in vertikaler Richtung in die Schutzhaube eingeführt. In dieser Bewegung treffen die Stirnfläche des Anzugszapfens 3 und der Vorsprung 8 zuerst aufeinander und die Rastzunge 7 gleitet aus ihrer Ruheposition nach außen, so daß sich das wulstförmige Führungsteil des Anzugszapfens 3 über den Vorsprung 8 der Rastzunge schieben kann und der Vorsprung 8 in den Einschnitt 4 einrastet. Die Entriegelung der Werkzeug-Aufnahme geschieht dadurch, daß der benutzer die Werkzeug-Aufnahme in Richtung der Rastzunge 7 verschwenkt, so daß über Bestätigung des Druckbereichs 9 die Werkzeug-Aufnahme entriegelt wird und nach unten entnommen werden kann. Die Entriegelungsstellung ist in gestrichelter Linie in Fig. 1 gezeigt.

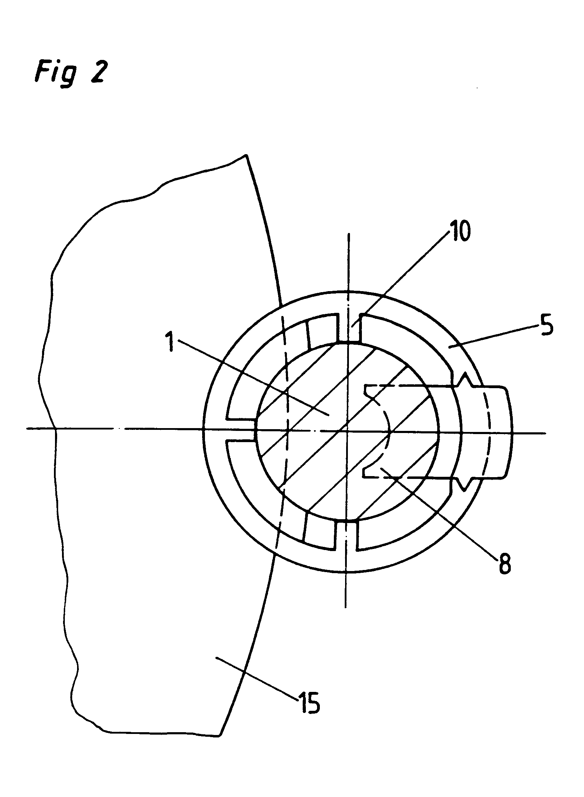

In der Fig. 2 ist eine weitere Ausführungsform von unten im querschnitt gezeigt. Im Gegensatz zu der Ausführungsform der Fig. 1 besitzt das Abdeckteil 6 längs verlaufende Stege 10, die bezüglich der Längsachse der Schutzhaube geneigt sind. Es sind mindestens drei Stege notwendig, welche den Konusteil 2 führen. Der Vorsprung 8 besitzt eine halbkreisförmige Ausnehmung, die in den Einschnitt 4 des Anzugszapfens 3 mit eines möglichst großen Stützfläche eingreift. Der Befestigungsschlitz der Schutzhaube erstreckt sich nahezu über den ganzen Durchmesser der Schutzhaube und wird von der Halteplatte gut gestützt.

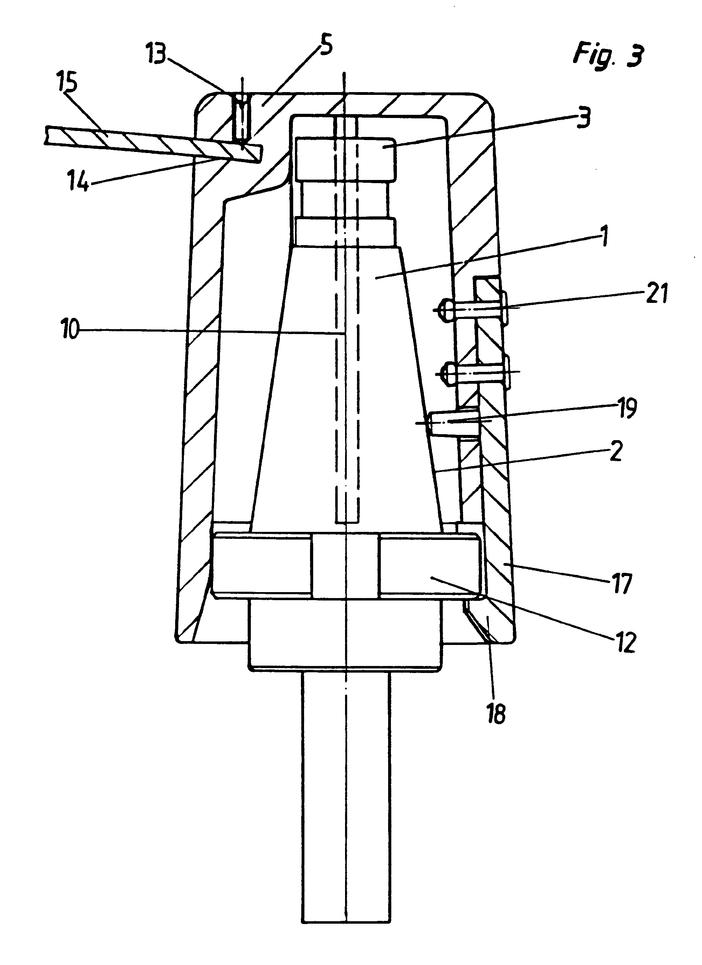

In der Fig. 3 ist eine weitere Ausführungsform der Erfindung gezeigt, bei der ein Ringwulst 12 als Anzugsteil der Werkzeug-Aufnahme dient. Der Ringwulst 12 ist unterhalb des Konusteils 2 vorgesehen. Zum Einrasten des Anzugsteils dient eine Rastzunge 17, die mit Nieten 21 an einer Schutzhaube 5 befestigt ist. Die Rastzunge kann aber auch einstücig in der Schutzhaube integriert sein. 17 Gegensatz zu der Ausführungsform in Fig. 1 ist hier die Rastzunge 17 im oberen Teil der Schutzhaube eingespannt und führt mit einem Vorsprung 18 im unteren bereich der Schutzhaube die vorgesehene Klemmbewegung aus. Ebenfalls ist ein Druckbreich 19 zur Betätigung der Rastzunge 17 vorgesehen. Der Vorteil dieser Ausführungsform liegt darin, daß die Rastzunge nicht ausgewechselt zu werden braucht, wenn verschiedene Anzugszapfen an der Werkzeug-Aufnahme angebracht sind. Der als Anzugsteil dienende Ringwulst 12 ist einstücig mit der Werkzeug-Aufnahme verbunden. Auch bei dieser Ausführungsform sind Stege 10 vorgesehen, die den Konusteil führen. Es sind mindestens 3 Stege notwendig.

## Patentansprüche

1. Werkzeugaufnahme mit Schutzhaube (5) mit einem Konustiel (2) und einem damit verbundenen Anzugsteil (3,12), wobei die Schutzhaube einen Abdeckteil (6), der an den Konusteil angepaßt ist und diesen verschmutzungssicher umschließt, und eine federnde Klemmeinrichtung (7,17) aufweist, die den Anzugsteil lösbar einrastet, wobei der Anzugsteil einen Einschnitt (4) aufweist, und die federnde Klemmeinrichtung eine Rastzunge (7,17) aufweist die mittels eines am federnden Ende gebildeten Vorsprungs (8,18) in den Einschnitt eingreift, dadurch **gekennzeichnet**, daß sich die Rastzunge (7,17) im wesentlichen parallel zur Längsachse der Schutzhaube (5) erstreckt, daß an dem Mittelteil der Rastzunge (7, 17) ein Druckbereich (9, 19) zur Entriegelung vorgesehen ist, der mit dem Konusteil (2) der Werkzeugmaschine (1) in Berührung steht, und daß der Konusteil (2) in Richtung der Rastzunge (7, 17) schwenkbar ist, wobei die Rastzunge von dem Druckbereich (9, 19) so betätigbar ist, daß sie den Anzugsteil (3, 12) freigibt.

**2.** Werkzeugaufnahme mit Schutzhaube nach Anspruch 1, dadurch gekennzeichnet, daß der Abdeckteil (6) in seinem oberen Bereich einen Befestigungsschlitz (14) besitzt, mittels dessen die Schutzhaube (5) an einer Halteplatte (15) befestigbar ist.

**3.** Werkzeugaufnahme mit Schutzhaube nach Anspruch 1, dadurch gekennzeichnet, daß die Schutzhaube (5) aus Thermoplast besteht und im Bereich des Befestigungsschlitzes (14) durch ein eingespritztes Aluminiumteil verstärkt ist.

**4.** Werkzeugaufnahme mit Schutzhaube nach einem der vorhergehenden Ansprüche, dadurch gekennzeichnet, daß die Rastzunge (7, 17) aus Thermoplast und der übrige Teil aus Duroplast besteht.

**5.** Werkzeugaufnahme mit Schutzhaube nach einem der vorhergehenden Ansprüche, dadurch gekennzeichnet, daß der Abdeckteil (6) an den Konusteil angepaßte Stege (10) aufweist, die den Konusteil (2) führen.

**6.** Werkzeugaufnahme mit Schutzhaube nach einem der vorhergehenden Ansprüche, dadurch gekennzeichnet, daß der Vorsprung (8, 18) der Rastzunge (7, 17) eine halbkreisförmige Ausnehmung aufweist, die der Kontur des Einschnitts entspricht.

**7.** Werkzeugaufnahme mit Schutzhaube nach einem der vorhergehenden Ansprüche, dadurch gekennzeichnet, daß die Rastzunge (7, 17) einstückig mit dem Abdeckteil (6) ausgebildet ist.

**Claims**

**1.** Tool holder having a protective hood (5) comprising a tapered part (2) and a draw-in part (3, 12) connected thereto, the protective hood having a covering part (6) adapted to the tapered part and surrounding the latter in order to protect it from contamination, and a resilient clamping device (7, 17) which releasably engages the draw- in part, the draw-in part having a notch (4) and the resilient clamping device having a locking tongue (7, 17) which engages the notch by means of a projection (8, 18) formed at the resilient end, characterised in that the locking tongue (7, 17) extends substantially parallel to the longitudinal axis of the protective hood (5), that a pressure region (9, 19) is provided on the central part of the locking tongue (7, 17) for release and is in contact with the tapered part (2) of the machine tool (1), and that the tapered part (2) can be swivelled in the direction of the locking tongue (7, 17), the locking tongue being actuated by the pressure region (9, 19) in such a manner that it releases the draw-in part (3, 12).

**2.** Tool holder having a protective hood according to claim 1, characterised in that the covering part (6) has a fastening slot (14) in its upper region by means of which the protective hood (5) can be secured to a retaining plate (15).

**3.** Tool holder having a protective hood according to claim 1, characterised in that the protective hood (5) consists of thermoplastic material and is reinforced in the region of the fastening slot (14) by means of a moulded-in aluminium part.

**4.** Tool holder having a protective hood according to one of the preceding claims, characterised in that the locking tongue (7, 17) consists of thermoplastic material and the other part consists of thermoset material.

**5.** Tool holder having a protective hood according to one of the preceding claims, characterised in that the covering part (6) has ribs (10) adapted to the tapered part, said ribs guiding the tapered part (2).

**6.** Tool holder having a protective hood according to one of the preceding claims, characterised in that the projection (8, 18) of the locking tongue (7, 17) has a semi-circular recess corresponding to the contour of the notch.

**7.** Tool holder having a protective hood according to one of the preceding claims, characterised in that the locking tongue (7, 17) is formed in one piece with the covering part (6).

## Revendications

1. Porte-outil doté d'un capuchon protecteur (5) et présentant une partie conique (2) à laquelle est assemblée une partie de tirage (3,12), le capuchon protecteur présentant une partie de recouvrement (6), qui est adaptée à la partie conique et l'entoure en la protégeant de l'encrassement, et un élément de serrage élastique (7,17) qui verrouille de manière amovible la partie de tirage, la partie de tirage présentant une encoche (4) et l'élément de serrage élastique présentant une languette d'enclenchement (7,17), qui s'engage dans l'encoche par une partie en saillie (8,18) formée à l'extrémité élastique,
**caractérisé** en ce que la languette d'enclenchement (7,17) s'étend sensiblement parallèlement à l'axe longitudinal du capuchon protecteur (5), en ce qu'une partie de pression (9,19), qui est en contact avec la partie conique (2) du porte-outil (1), est prévue dans la région médiane de la languette d'enclenchement (7,17) en vue du déverrouillage, et en ce que la partie conique (2) peut être pivotée en direction de la languette d'enclenchement (7,17), la languette d'enclenchement pouvant alors être actionnée par la partie de pression (9,19) de telle sorte qu'elle libère la partie de tirage (3,12).

2. Porte-outil doté d'un capuchon protecteur selon la revendication 1, **caractérisé** en ce que la partie de recouvrement (6) possède, dans sa région supérieure, une fente de fixation (14) permettant de fixer le capuchon protecteur (5) à une plaque de support (15).

3. Porte-outil doté d'un capuchon protecteur selon la revendication 1, **caractérisé** en ce que le capuchon protecteur (5) est réalisé en matière thermoplastique et est renforcé par une partie en aluminium injectée dans la région de la fente de fixation (14).

4. Porte-outil doté d'un capuchon protecteur selon l'une des revendications précédentes, **caractérisé** en ce que la languette d'enclenchement (7,17) est réalisée en matière thermoplastique et le reste du capuchon en résine thermodurcissable.

5. Porte-outil doté d'un capuchon protecteur selon l'une des revendications précédentes, **caractérisé** en ce que la partie de recouvrement (6) présente des nervures (10), qui sont adaptées à la partie conique (2) et la guident.

6. Porte-outil doté d'un capuchon protecteur selon l'une des revendications précédentes, **caractérisé** en ce que la partie en saillie (8,18) de la languette d'enclenchement (7,17) présente un évidement semi-circulaire, correspondant au contour de l'encoche.

7. Porte-outil doté d'un capuchon protecteur selon l'une des revendications précédentes, **caractérisé** en ce que la languette d'enclenchement (7,17) est réalisée d'une pièce avec la partie de recouvrement (6).

**Fig. 1**

Fig 2

Fig. 3